# EUROPÄISCHE PATENTSCHRIFT

(11) **EP 1 634 748 B1**
(45) Veröffentlichungstag und Bekanntmachung des Hinweises auf die Patenterteilung: **26.11.2008**
(21) Anmeldenummer: 05019393.7
(22) Anmeldetag: 07.09.2005
(51) Int. Cl.: B60J 7/06, B60J 7/12, B60J 7/047

(54) **Dachsystem für ein Kraftfahrzeug mit wenigstens zwei festen Dachteilen**
Roof system for a vehicle with at least two rigid roof elements
Système de toit pour un véhicule avec au moins deux éléments de toit rigides

(30) Priorität: 09.09.2004 DE 102004043569
(43) Veröffentlichungstag der Anmeldung: 15.03.2006
(73) Patentinhaber: Wilhelm Karmann GmbH, 49084 Osnabrück (DE)
(72) Erfinder: Kreiling, Nils, 49078 Osnabrück (DE)

(56) Entgegenhaltungen:
- EP-A- 1 555 152
- DE-A1- 3 828 062
- DE-A1- 10 205 935
- DE-A1- 19 846 006

## Beschreibung

Die Erfindung betrifft ein Dachsystem für ein Kraftfahrzeug gemäß der im Oberbegriff des Patentanspruches 1 näher definierten Art.

Aus der DE 198 46 006 A1 ist ein starres Klappverdeck für Kraftfahrzeuge bekannt, welches aus wenigstens zwei untereinander verbundenen starren Elementen gebildet ist, wobei in einem der beiden Elemente eine Heckscheibe angeordnet ist. Das Klappverdeck überdeckt den Fahrgastraum des Fahrzeugs in einer Schließlage und ist in einer Öffnungslage in einem Verdeckkasten innerhalb der Fahrzeugkarosserie untergebracht.

Des Weiteren umfasst das Klappverdeck außer einem Festdachkörper auch einen flexiblen Bezug, der das gesamte Verdeck als eine so genannte Verdeckstoffbespannung übergreift. Die Verdeckstoffbespannung ist zur Abdichtung der gegenseitigen Stoßstellen zwischen aneinander grenzenden Rädern der starren Elemente vorgesehen, wobei der Verdeckstoffbespannung auch eine ästhetische Wirkung zukommt, da sie einen höchst kontinuierlichen glattflächigen Verlauf der Dachkontur des Fahrzeugs gewährleistet.

Die Verdeckstoffbespannung ist lediglich mit der in Vorwärtsfahrtrichtung vordersten Dachplatte und mit dem in Vorwärtsfahrtrichtung vorne liegenden Stirnende des die Heckscheibe aufnehmenden Bauteils des Klappverdecks verbunden, so dass eine Bewegung der festen Dachteile nicht behindert wird.

Nachteilig dabei ist jedoch, dass das mit der flexiblen Verdeckstoffbespannung ausgeführte Klappverdeck in vollständig geöffnetem Zustand des Fahrzeugdaches, d. h. in abgelegtem Zustand der Dachteile, in einem in der Fahrzeugkarosserie vorgesehenen Verdeckkasten den gleichen unerwünscht hohen Stauraumbedarf wie herkömmliche klappbare Festdächer aufweist.

Die nachveröffentlichte europäische Patentanmeldung EP 1 555 152 A2 und die deutsche Patentanmeldung DE 102 05 935 A1 offenbaren eine Fahrzeugdachstruktur eines Fahrzeugdaches, das an einem Fahrzeug bewegbar gelagert zwischen seiner Schließstellung über dem Fahrgastraum und seiner Offenstellung im heckseitigen Dachablageraum des Fahrzeugs verstellbar ist. Die Dachstruktur weist dabei einen Vorderabschnitt, einen Mittelabschnitt und einen Hinterabschnitt auf, wobei der Vorderabschnitt und der Hinterabschnitt als feste Dachteile gebildet sind und die Fahrzeugdachstruktur durch Ergänzung eines festschaligen mittleren Dachteils als Mittelabschnitt ein Hardtopdach oder durch Ergänzung eines zumindest den Mittelabschnitt überdeckenden flexiblen Dachteils ein Faltverdeck bildet.

Eine derartige Ausbildung eines Fahrzeugdaches ist allerdings bei Cabriolet-Fahrzeugen mit großen Fahrzeuglängen hinsichtlich des Stauraums des Fahrzeugdaches nachteilhafterweise in der Flexibilität eingeschränkt, da die festen Dachteile bei großen Cabriolet-Fahrzeugen eine entsprechende in Fahrzeuglängsrichtung verlaufende Länge aufweisen.

Der vorliegenden Erfindung liegt daher die Aufgabe zugrunde, ein Dachsystem für ein Kraftfahrzeug mit wenigstens zwei festen Dachteilen, welche aus einer ersten einem geschlossenen Zustand des Fahrzeugdachs äquivalenten Position in eine zweite einem geöffneten Zustand des Fachzeugdachs äquivalente Position in Bezug auf eine Dachöffnung begrenzende Karosseriebauteile bewegbar ausgeführt sind, zur Verfügung zu stellen, welches im vollständig geöffneten Zustand des Fahrzeugdachs auch bei größeren vom Verdeck zu überdeckenden Fahrzeuglängen einen geringen Stauraumbedarf hat.

Erfindungsgemäß wird diese Aufgabe mit einem Dachsystem gemäß den Merkmalen des Patentanspruches 1 gelöst.

Das erfindungsgemäße Dachsystem für ein Kraftfahrzeug mit festen Dachteilen, welche aus einer ersten einem geschlossenen Zustand des Fahrzeugdachs äquivalenten Position wenigstens in eine zweite einem geöffneten Zustand des Fahrzeugdachs äquivalente Position in Bezug auf eine Dachöffnung begrenzende Karosseriebauteile bewegbar ausgeführt sind, bei dem die festen Dachteile mit flexiblem Verdeckmaterial verbunden sind, weist in vollständig geöffnetem Zustand des Fahrzeugdachs einen geringen Stauraumbedarf auf.

Dies wird dadurch erreicht, dass die festen Dachteile die Dachöffnung in geschlossenem Zustand des Fachzeugdachs wenigstens teilweise überdecken und das flexible Verdeckmaterial in geschlossenem Zustand des Fahrzeugdachs im Wesentlichen freie Bereiche der Dachöffnung, d. h. von den festen Dachteilen nicht übergriffene Bereiche, bedeckt, wobei zwischen einem der beiden Dachteile und einem die Dachöffnung in Fahrzeuglängsrichtung begrenzenden Karosserieteil ein weiteres festes und zum Öffnen des Fahrzeugdachs zwischen einer ersten dem geschlossenen Zustand des Fahrzeugdaches äquivalenten Position und einer zweiten dem geöffneten Zustand des Fahrzeugdaches äquivalenten Position verfahrbar ausgeführtes weiteres festes Dachteil vorgesehen ist, das über einen flexiblen Verdeckmaterialbereich mit dem benachbart angeordneten festen Dachteil wirkverbunden ist.

Das erfindungsgemäße Dachsystem ist in einer so genannten Mischbauweise ausgeführt, bei welcher die Dachöffnung von festen Dachteilen und von flexiblem Verdeckmaterial, wie es beispielsweise bei Cabrioletfahrzeugen mit Weichverdecken zur Anwendung kommt, bedeckt ist.

Diese erfindungsgemäße Mischbauweise eines Fahrzeugdachs bietet auf einfache Art und Weise die Möglichkeit, die festen Dachteile mit geringeren Abmessungen auszuführen, wodurch das Dachsystem in abgelegtem Zustand weniger Stauraumbedarf aufweist. Eine von dem Dachsystem freigebbare Querschnittsfläche bleibt jedoch im Vergleich zu aus dem Stand der Technik bekannten Dachsystemen unverändert, da von den festen Dachteilen nicht überdeckbare Bereiche von dem nur wenig Stauraum benötigenden flexiblen Verdeckstoff verdeckt werden.

Ein wesentlicher Vorteil der Erfindung ist auch darin zu sehen, dass das Fahrzeugdach durch die in Fahrzeuglängsrichtung entsprechend kurz ausbildbaren festen Dachteile bei geöffnetem Verdeck in einer wenigstens annährend parallel zu einer Rücksitzlehne eines Rücksitzbereiches verlaufenden Anordnung abgelegt werden können, ohne eine Sicht eines Fahrers durch einen Rückspiegel zu beeinträchtigen, und somit hinsichtlich des benötigten Stauraumes optimiert ablegbar sind.

Weitere Vorteile und vorteilhafte Ausgestaltungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden.

Es zeigt:
- Fig. 1: eine dreidimensionale Darstellung eines Teils eines Kraftfahrzeugs mit vollständig geschlossenem Fahrzeugdach;
- Fig. 2: eine zweidimensionale Seitenansicht eines Bereichs des in Fig. 1 dargestellten Kraftfahrzeugs mit vollständig geöffnetem Fahrzeugdach; und
- Fig. 3: eine stark schematisierte Längsschnittansicht durch ein weiteres Ausführungsbeispiel eines Dachsystems für ein Kraftfahrzeug.

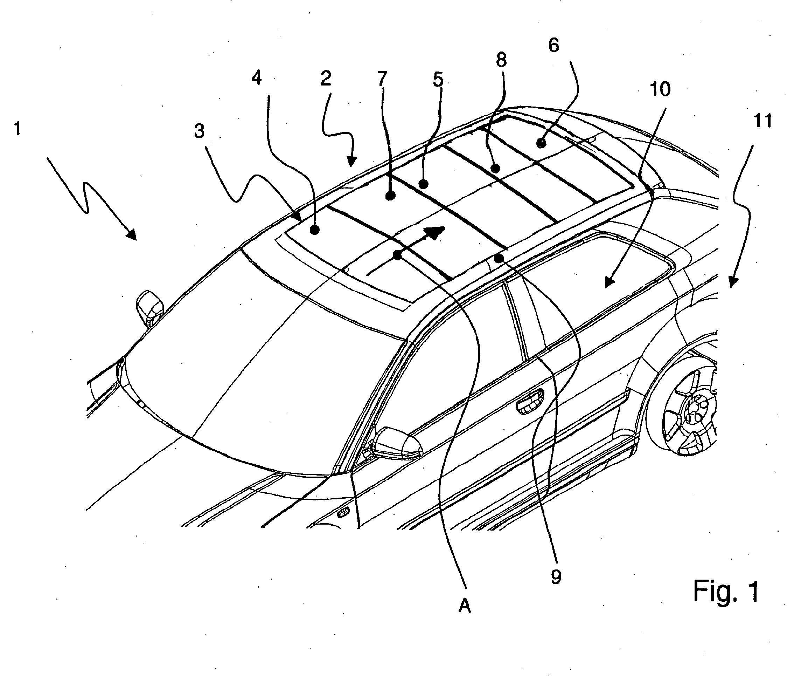

Fig. 1 zeigt eine schematisierte dreidimensionale Teilansicht eines Kraftfahrzeugs 1 mit einem öffenbaren Fahrzeugdach 2. Dazu ist das Fahrzeugdach 2 mit einem Dachsystem 3 ausgeführt, das vorliegend aus drei festen Dachteilen 4, 5 und 6 und zwei jeweils zwischen den festen Dachteilen 4 und 5 bzw. 5 und 6 sowie jeweils mit den festen Dachteilen 4 und 5 bzw. 5 und 6 verbundenen flexiblen Verdeckmaterialbereichen 7, 8 ausgeführt ist. Die flexiblen Verdeckmaterialbereiche 7, 8 sind vorliegend aus einem an sich bekannten Textil gefertigt, wie es bei herkömmlichen Cabrioletfahrzeugen mit Weichverdecken eingesetzt wird, wobei es selbstverständlich im Ermessen des Fachmannes liegt, die flexiblen Verdeckmaterialbereiche 7 und 8 in Abhängigkeit des jeweils vorliegenden Anwendungsfalles aus anderen geeigneten flexiblen Materialien herzustellen.

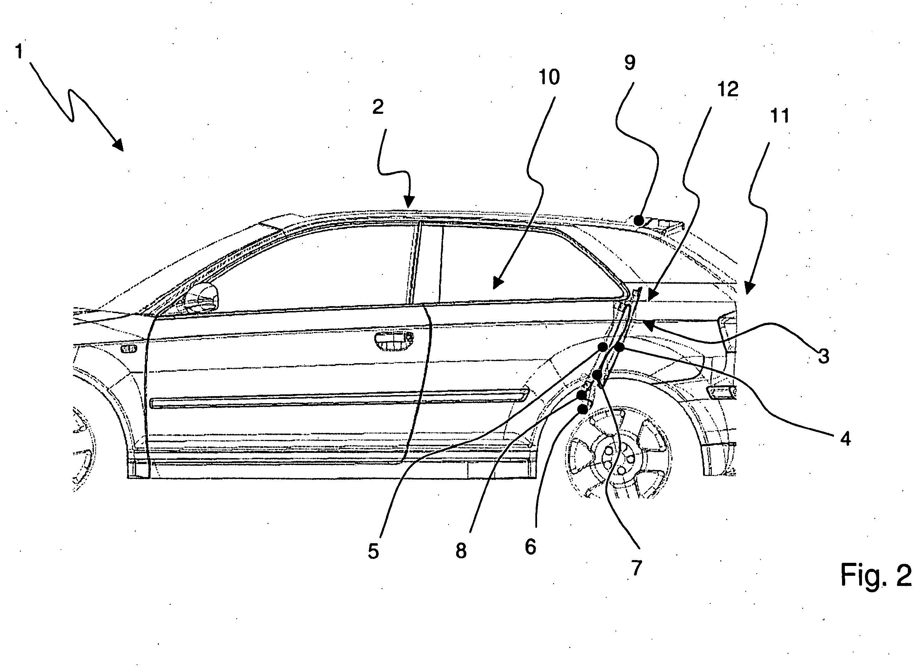

Die festen Dachteile 4 bis 6 sind gemeinsam mit den flexiblen Verdeckmaterialbereichen 7 und 8 aus der ersten in Fig. 1 dargestellten und einem geschlossenen Zustand des Fahrzeugdachs 2 äquivalenten Position in eine in Fig. 2 dargestellte zweite einem vollständig geöffneten Zustand des Fahrzeugdachs 2 äquivalente Position in Bezug auf die in geschlossenem Zustand des Fahrzeugdachs 2 von dem Dachsystem 3 vollständig bedeckte bzw. geschlossene Dachöffnung begrenzende Karosseriebauteile 9 bewegbar ausgeführt.

Die festen Dachteile 4 bis 6 überdecken die Dachöffnung zusammen mit den flexiblen Verdeckbereichen 7 und 8 in geschlossenem Zustand des Fahrzeugdachs 2 in Fahrzeugquerrichtung komplett. Die flexiblen Verdeckmaterialbereiche 7 und 8 sind in den Bereichen zwischen den jeweils einander zugewandten Stirnseiten der Dachteile 4 und 5 bzw. 5 und 6 angeordnet und jeweils mit den beiden benachbarten Dachteilen 4 und 5 bzw. 5 und 6 fest verbunden.

Das Dachsystem 3 ist in einer so genannten Mischbauweise ausgeführt, die alternierend aufeinander folgende feste plattenartige Dachteile 4 bis 6 und flexibel ausgeführte Dachbereiche bzw. Verdeckmaterialbereiche 7, 8 aufweist.

Neben dem vollständig geöffneten Zustand des Fahrzeugdachs 2 sind mit dem Dachsystem 3 vorzugsweise auch verschiedene weitere lediglich einem teilweise geöffneten Zustand des Fahrzeugdachs 2 äquivalente Zwischenstellungen der festen Dachteile 4 bis 6 darstellbar, welche nachfolgend näher beschrieben werden.

Zunächst ist das feste Dachteil 4 in der in Fig. 1 durch den Pfeil A dargestellten Richtung in der Ebene der Dachöffnung bzw. des Fahrzeugdachs 2 in Fahrzeuglängsrichtung auf das zweite feste Dachteil 5 ähnlich einem Schiebedach verschiebbar ausgeführt, um das Fahrzeugdach 2 oberhalb von Fahrzeugvordersitzen zu öffnen. Während einer solchen Bewegung des ersten festen Dachteiles 4 wird der zwischen dem ersten festen Dachteil 4 und dem zweiten festen Dachteil 5 angeordnete erste flexible Verdeckmaterialbereich 7 aus einer bei geschlossenem Fahrzeugdach 2 gespannten Lage in einen zusammengeschobenen bzw. gerafften Zustand verbracht, da der Abstand zwischen den beiden festen Dachteilen 4 und 5 verringert ist.

Hiervon abweichend besteht jedoch auch die Möglichkeit, das erste feste Dachteil 4 in der in Fig. 1 dargestellten und dem geschlossenen Zustand des Fahrzeugdachs 2 äquivalenten ersten Position zu belassen und das zweite feste Dachteil 5 gemeinsam mit dem dritten festen Dachteil 6 in Richtung des ersten festen Dachteiles 4 zu verschieben, so dass das Fahrzeugdach 2 oberhalb eines Rücksitzbereiches des Kraftfahrzeugs 1 geöffnet ist.

In diesem Zusammenhang wird darauf hingewiesen, dass es auch vorgesehen ist, dass sowohl das erste feste Dachteil 4 als auch das zweite feste Dachteil 5 in der in Fig. 1 dargestellten und dem geschlossenen Zustand des Fahrzeugdachs 2 äquivalenten ersten Position verbleiben und lediglich das dritte feste Dachteil 6 in Fahrzeuglängsrichtung derart bewegbar ausgeführt ist, dass der Abstand zwischen dem zweiten festen Dachteil 5 und dem dritten festen Dachteil 6 verringert wird und das Fahrzeugdach 2 lediglich im hinteren Fahrzeugbereich geöffnet wird.

Zusätzlich ist es auch vorgesehen, dass das Fahrzeugdach 2 im vorderen Fahrzeugbereich zwischen den die Dachöffnung begrenzenden Karosserieteilen 9, d. h. zwischen den Karosserieteilen 9 und dem ersten festen Dachteil 4 sowie im hinteren Fahrzeugbereich, d. h. zwischen den Karosserieteilen 9 und dem dritten festen Dachteil 6 durch gleichzeitiges Aufeinanderzubewegen der Dachteile 4 und 6 bzw. 4 bis 6 geöffnet wird.

Bei der in Fig. 2 gezeigten Darstellung des Kraftfahrzeugs 1 ist das Fahrzeugdach 2 vollständig geöffnet und das Dachsystem 3 in einem hinter einem zwischen einem Rücksitzbereich 10 des Kraftfahrzeugs 1 und einem Kofferraumbereich 11 ausgebildeten Ablagebereich 12 in platzsparender Art und Weise abgelegt, so dass ein Volumen des Kofferraumbereiches 11 bei geöffnetem Fahrzeugdach 2 im Vergleich zum geschlossenen Zustand des Fahrzeugdachs 2 nur unwesentlich verringert ist.

Das Dachsystem 3 ist bei dem in Fig. 2 dargestellten Ausführungsbeispiel des Kraftfahrzeugs 1 in einer wenigstens annähernd zu einer nicht näher dargestellten Rücksitzlehne des Rücksitzbereiches 10 parallel verlaufenden Anordnung positioniert. Diese im Wesentlichen wenigstens annähernd vertikale Ablageposition des Dachsystems 3 ist im Vergleich zu aus dem Stand der Technik bekannten Fahrzeugen, die mit klappbaren Festdächern ausgebildet sind, möglich, da die festen Dachteile 4 bis 6 derartige Abmessungen aufweisen, dass sie in der in Fig. 2 gezeigten Ablageposition eine Sicht eines Fahrers durch den Rückspiegel nicht beeinträchtigen.

Des Weiteren weist das Dachsystem 3 durch die vorbeschriebene Mischbauweise aus festen und flexiblen Dachbereichen in abgelegtem Zustand nur eine geringe Höhe auf, so dass das Dachsystem 3 in der in Fig. 2 dargestellten Ablageposition in Fahrzeuglängsrichtung nur wenig Stauraum benötigt und damit das Volumen des Kofferraumbereiches 11 nur in geringem Umfang verkleinert.

Selbstverständlich liegt es im Ermessen des Fachmannes, das Dachsystem 3 bei vollständig geöffnetem Fahrzeugdach 2 an einer anderen als in Fig. 2 dargestellten Position in der Karosserie des Kraftfahrzeugs 1 abzulegen.

Ausgehend von dem in Fig. 1 dargestellten geschlossenen Zustand des Fahrzeugdachs 2 wird das Dachsystem 3 in der nachfolgend beschriebenen Art und Weise in die in Fig. 2 dargestellte Ablageposition verbracht.

Zunächst wird das erste feste Dachteil 4 aus seiner ersten dem geschlossenen Zustand des Fahrzeugdachs 2 äquivalenten Position in Richtung des zweiten festen Dachteiles 5 verschoben, bis es in Bezug auf den Fahrgastinnenraum des Kraftfahrzeugs 1 eine Position oberhalb des zweiten festen Dachteiles 5 erreicht. Der flexible Verdeckmaterialbereich 7 ist dabei in platzsparender Art und Weise zwischen den beiden festen Dachteilen 4 und 5 angeordnet. Anschließend werden die festen Dachteile 4 bis 6 gemeinsam mit den flexiblen Verdeckbereichen 7, 8 von einer nicht näher dargestellten Verstellmechanik in die in Fig. 2 dargestellte Ablage-position verstellt, wobei die Verstellmechanik entweder als Koppelgetriebe oder auch als eine aus der Cabriolet-Verdecktechnik an sich bekannte Kulissenführung mit einem gedrehten Draht ausgeführte Verstellmechanik ausgebildet sein kann.

Damit das Fahrzeugdach 2 in geschlossenem Zustand gegenüber der Umgebung ausreichend abgeschirmt ist, sind zwischen den die Dachöffnung begrenzenden Karosserieteilen 9 und den einzelnen Bauteilen 4 bis 8 des Dachsystems jeweils nicht näher dargestellte Dichteinrichtungen vorgesehen, wobei eine Abdichtung zwischen den festen Dachteilen 4 bis 6 und den flexiblen Verdeckmaterialbereichen 7 und 8 durch Verkleben oder damit vergleichbaren Maßnahmen gewährleistet ist.

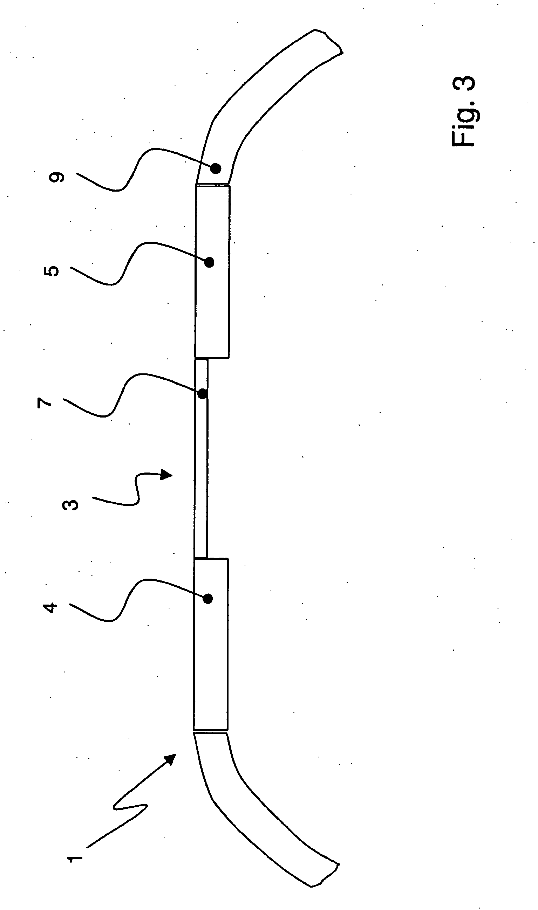

Fig. 3 zeigt eine stark schematisierte Teillängsschnittansicht durch ein weiteres zu dem in Fig. 1 und Fig. 2 dargestellten Dachsystem 3 alternatives Dachsysystem 3, bei dem eine Dachöffnung lediglich von zwei festen Dachteilen 4 und 5 und einem dazwischen angeordneten flexiblen Verdeckmaterialbereich 7 verschließbar ist. Die Wirkungsweise des in Fig. 3 dargestellten Dachsystems 3 entspricht im Wesentlichen dem in Fig. 1 und Fig. 2 dargestellten Dachsystem 3, wobei die in Fig. 1 und Fig. 2 dargestellte Lösung bei größeren Fahrzeuglängen bevorzugt ist, da die Abmessungen der flexiblen Verdeckmaterialbereiche in Fahrzeuglängsrichtung durch die Ausgestaltung des Dachsystems mit dem dritten festen Dachteil 6 die bei herkömmlich ausgebildeten Weichverdecken bekannten Nachteile reduziert.

Bei beiden in der Zeichnung dargestellten Ausführungsbeispielen eines erfindungsgemäß ausgeführten Dachsystems können die festen Dachbereiche aus transparentem Material, vorzugsweise aus Glas, gebildet sein, so dass im Fahrgastinnenraum eines Kraftfahrzeugs durch das durch die transparent ausgeführten Dachbereiche eintretende Licht eine angenehme Atmosphäre erzeugt wird und ein Fahrkomfort auf einfache Art und Weise erhöht ist.

### Bezugszeichen

- 1: Kraftfahrzeug
- 2: Fahrzeugdach
- 3: Dachsystem
- 4: erstes festes Dachteil
- 5: zweites festes Dachteil
- 6: drittes festes Dachteil
- 7: erster flexibler Verdeckmaterialbereich
- 8: zweiter flexibler Verdeckmaterialbereich
- 9: Karosseriebauteile
- 10: Rücksitzbereich
- 11: Kofferraumbereich
- 12: Ablagebereich

## Patentansprüche

1. Dachsystem (3) für ein Kraftfahrzeug mit wenigstens zwei festen Dachteilen (4, 5, 6), welche aus einer ersten einem geschlossenen Zustand des Fahrzeugdachs (2) äquivalenten Position wenigstens in eine zweite einem geöffneten Zustand des Fahrzeugdachs (2) äquivalente Position in Bezug auf eine Dachöffnung begrenzende Karosseriebauteile (9) bewegbar ausgeführt sind, wobei die festen Dachteile (4, 5) über wenigstens einen flexiblen Verdeckmaterialbereich (7) verbunden sind, und wobei die festen Dachteile (4, 5) die Dachöffnung in geschlossenem Zustand des Fahrzeugdachs (2) wenigstens teilweise überdecken und der flexible Verdeckmaterialbereich (7) in geschlossenem Zustand des Fahrzeugdachs (2) im Wesentlichen einen freien Bereich der Dachöffnung bedeckt,
**dadurch gekennzeichnet,**
**dass** zwischen einem der beiden festen Dachteile (5) und einem die Dachöffnung in Fahrzeuglängsrichtung begrenzenden Karosserieteil (9) ein weiteres festes und zum Öffnen des Fahrzeugdachs (2) zwischen einer ersten dem geschlossenen Zustand des Fahrzeugdaches (2) äquivalenten Position und einer zweiten dem geöffneten Zustand des Fahrzeugdaches (2) äquivalenten Position verfahrbar ausgeführtes Dachteil (6) vorgesehen ist, das über einen flexiblen Verdeckmaterialbereich (8) mit dem benachbart angeordneten festen Dachteil (5) wirkverbunden ist.

2. Dachsystem nach Anspruch 1,
**dadurch gekennzeichnet,**
**dass** in teilweise geöffnetem Zustand des Fahrzeugdachs (2) das weitere feste Dachteil (6) und das dazu benachbart angeordnete feste Dachteil (5) in ihrer ersten Position angeordnet sind und das andere feste Dachteil (4) in Richtung der sich in ihrer ersten Position befindlichen Dachteile (5, 6) verstellt ist.

3. Dachsystem nach Anspruch 1,
**dadurch gekennzeichnet,**
**dass** in teilweise geöffnetem Zustand des Fahrzeugdachs (2) eines der festen Dachteile (4, 5) in seiner ersten Position angeordnet ist und das weitere Dachteil (6) in Richtung des sich in seiner ersten Position befindlichen festen Dachteils (4, 5) verstellt ist.

4. Dachsystem nach Anspruch 1,
**dadurch gekennzeichnet,**
**dass** in teilweise geöffnetem Zustand des Fahrzeugdachs (2) eines der festen Dachteile (4) in seiner ersten Position angeordnet ist und das weitere Dachteil (6) und das dazu benachbart angeordnete feste Dachteil (5) in Richtung des sich in seiner ersten Position befindlichen festen Dachteils (4) verstellt sind.

5. Dachsystem nach Anspruch 1,
**dadurch gekennzeichnet,**
**dass** in teilweise geöffnetem Zustand des Fahrzeugdachs (2) alle festen Dachteile (4, 5, 6) aus ihrer ersten Position in Richtung der anderen Dachteile (4, 5, 6) verstellt sind.

6. Dachsystem nach einem der Ansprüche 1 bis 5,
**dadurch gekennzeichnet,**
**dass** in vollständig geöffnetem Zustand des Fahrzeugdachs (2) die festen Dachteile (4, 5, 6) und die jeweils damit verbunden flexiblen Verdeckmaterialbereiche (7, 8) in einem Ablagebereich (12) angeordnet sind, der auf der dem Fahrgastraum abgewandten Seite eines Rücksitzbereiches (10) ausgebildet ist.

7. Dachsystem nach einem der Ansprüche 1 bis 6,
**dadurch gekennzeichnet,**
**dass** das weitere feste Dachteil (6) an seinen den die Dachöffnung begrenzenden Karosserieteilen (9) zugewandten Stirnseiten mit einer Dichteinrichtung ausgeführt ist.

8. Dachsystem nach einem der Ansprüche 1 bis 7,
**dadurch gekennzeichnet,**
**dass** die Dachteile (4, 5) aus transparentem Material, vorzugsweise aus Glas, gebildet sind.

## Claims

1. A roof system (3) for a motor vehicle with at least two solid roof parts (4, 5, 6), which are designed to be movable, relative to vehicle body components (9) which border a roof opening, out of a first position equivalent to a closed state of the vehicle roof (2) at least into a second position equivalent to an opened state of the vehicle roof (2), wherein the solid roof parts (4, 5) are connected via at least one flexible soft-top material area (7), and wherein the solid roof parts (4, 5) at least partly overlap the roof opening when the vehicle roof (2) is in the closed state and the flexible soft-top material area (7) substantially covers a free area of the roof opening when the vehicle roof (2) is in the closed state,
**characterised in that**
there is provided, between one of the two solid roof parts (5) and a vehicle body part (9) which borders the roof opening in the vehicle longitudinal direction, a further solid roof part (6) which, in order to open the vehicle roof (2), is designed so as to be movable between a first position equivalent to the closed state of the vehicle roof (2) and a second position equivalent to the opened state of the vehicle roof (2) and which is operatively connected, via a flexible soft-top material area (8), to the adjacently arranged solid roof part (5).

2. The roof system according to Claim 1,
**characterised in that**
in the partly opened state of the vehicle roof (2), the further solid roof part (6) and the solid roof part (5) arranged adjacent thereto are arranged in their first position and the other solid roof part (4) is displaced in the direction of the roof parts (5, 6) which are situated in their first position.

3. The roof system according to Claim 1,
**characterised in that**
in the partly opened state of the vehicle roof (2), one of the solid roof parts (4, 5) is arranged in its first position and the further roof part (6) is displaced in the direction of the solid roof part (4, 5) which is situated in its first position.

4. The roof system according to Claim 1,
**characterised in that**
in the partly opened state of the vehicle roof (2), one of the solid roof parts (4) is arranged in its first position and the further roof part (6) and the solid roof part (5) arranged adjacent thereto are displaced in the direction of the solid roof part (4) which is situated in its first position.

5. The roof system according to Claim 1,
**characterised in that**
in the partly opened state of the vehicle roof (2), all solid roof parts (4, 5, 6) are displaced out of their first position in the direction of the other roof parts (4, 5, 6).

6. The roof system according to one of Claims 1 to 5,
**characterised in that**
in the fully opened state of the vehicle roof (2), the solid roof parts (4, 5, 6) and the respective flexible soft-top material areas (7, 8) connected therewith are arranged in a storage area (12) which is configured on the rear seat area (10) side which is facing away from the passenger space.

7. The roof system according to one of Claims 1 to 6,
**characterised in that**
the further solid roof part (6) is designed with a seal arrangement at its face sides which face the vehicle body parts (9) which border the roof opening.

8. The roof system according to one of Claims 1 to 7,
**characterised in that**
the roof parts (4, 5) are formed from a transparent material, preferably from glass.

## Revendications

1. Système de toit (3) pour un véhicule automobile avec au moins deux parties de toit fixes (4, 5, 6), lesquelles sont réalisées de façon à pouvoir être déplacées d'une première position équivalant à un état fermé du toit du véhicule automobile (2) dans au moins une seconde position équivalant à un état ouvert du toit du véhicule automobile (2) par rapport à des éléments de carrosserie (9) délimitant une ouverture de toit, les parties de toit fixes (4, 5) étant raccordées par l'intermédiaire d'au moins une zone flexible de la capote (7), et les parties de toit fixes (4, 5) recouvrant au moins partiellement l'ouverture de toit du véhicule automobile (2) lorsque ce dernier est fermé, et la zone flexible de la capote (7) recouvrant substantiellement une zone libre de l'ouverture de toit lorsque le toit du véhicule automobile (2) est fermée,
**caractérisé en ce que**
entre l'une des deux parties de toit fixes (5) et un élément de carrosserie (9) délimitant l'ouverture de toit dans le sens longitudinal du véhicule automobile, il est prévu une autre partie de toit fixe (6) servant à l'ouverture du toit du véhicule automobile (2) et réalisée de façon à pouvoir être déplacée entre une première position équivalant à l'état fermé du toit du véhicule automobile (2) et une seconde position équivalant à l'état ouvert du toit du véhicule automobile (2), ladite partie de toit étant en liaison fonctionnelle, par l'intermédiaire d'une zone flexible de la capote (8), avec la partie de toit fixe (5) adjacente.

2. Système de toit selon la revendication 1,
**caractérisé en ce que,**
lorsque le toit du véhicule automobile (2) est partiellement ouvert, l'autre partie de toit fixe (6) et la partie de toit fixe adjacente (5) sont disposées dans leur première position et l'autre partie de toit fixe (4) est déplacée dans le sens des parties de toit (5, 6) se trouvant dans leur première position.

3. Système de toit selon la revendication 1,
**caractérisé en ce que,**
lorsque le toit du véhicule automobile (2) est partiellement ouvert, l'unes des parties de toit fixes (4, 5} est disposée dans sa première position et l'autre partie de toit (6) est déplacée dans le sens de la partie de toit fixe (4, 5) se trouvant dans sa première position.

4. Système de toit selon la revendication 1,
**caractérisé en ce que,**
lorsque le toit du véhicule automobile (2) est partiellement ouvert, l'une des parties de toit fixes (4) est disposée dans sa première position et l'autre partie de toit (6) ainsi que la partie de toit fixe (5) adjacente sont déplacées dans le sens de la partie de toit fixe (4) se trouvant dans sa première position.

5. Système de toit selon la revendication 1
**caractérisé en ce que,**
lorsque le toit du véhicule automobile (2) est partiellement ouvert, toutes les parties de toit fixes (4, 5, 6) sont déplacées de leur première position dans le sens des autres parties de toit (4, 5, 6).

6. Système de toit selon l'une des revendications 1 à 5,
**caractérisé en ce que,**
lorsque le toit du véhicule automobile (2) est complètement ouvert, les parties de toit fixes (4, 5, 6) ainsi que les zones de capote flexibles (7, 8) respectivement raccordées sont disposées dans une zone de rangement (12) qui est formée sur le côté d'une zone arrière (10) opposé à l'habitacle des passagers.

7. Système de toit selon l'une des revendications 1 à 6,
**caractérisé en ce que,**
sur ses côtés frontaux tournés vers les parties de carrosserie (9) délimitant l'ouverture de toit, l'autre partie de toit fixe (6) comprend un dispositif d'étanchéité.

8. Système de toit selon l'une des revendications 1 à 7,
**caractérisé en ce que,**
les parties de toit (4, 5) sont réalisées dans un matériau transparent, de préférence en verre.
